# EUROPEAN PATENT SPECIFICATION

(11) **EP 0 491 681 B1**
(45) Date of publication and mention of the grant of the patent: **27.12.1996**
(21) Application number: 92200720.8
(22) Date of filing: 14.10.1987
(51) Int. Cl.: A01F 25/20

(54) **An implement for cutting fodder, such as silage**
Gerät zum Schneiden von Futter, z.B. Silagegut
Appareil pour couper du fourrage comme l'ensilage

(30) Priority: 16.10.1986 NL 8602592
(43) Date of publication of application: 24.06.1992
(62) Divisional of application: 87201975.7
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 140 433
- DE-A- 3 023 986
- DE-A- 3 601 112
- DE-U- 8 625 229

## Description

The invention relates to an implement for cutting fodder, such as silage, comprising an upwardly directed frame, along which an at least predominantly horizontally extending U-shaped cutter member is movable in upward and downward direction, the cutter member including a carrier supporting at least one first knife extending rearwardly at an angle of about 90° to the plane defined by the upwardly directed frame and a second knife located near the rear end of the first knife relative to the frame and extending parallel to the said frame within a horizontal plane, which first and second knives by means of a hydraulic ram connected rigidly to the carrier near an end portion of a respective knife, are movable in their longitudinal direction relative to said carrier.

A suchlike implement is e.g. known from the German Offenlegungsschrift DE-30 23 986. The drive of each knife is in this case separated from that of another knife, so that at least three driving members, in this case hydraulic rams, are needed. In another construction, such as revealed by EP-A 0 140 433, the drive of the knives is located at the end of a first knife near the upwardly extending frame. This construction implies that the force of the drive is transmitted to and around a corner of the U-shaped cutter member. The construction for this purpose is very liable to risk of fracture of the first knife, due to the relatively great forces that are mechanically transmitted to the second knife, either through or along the first knife. Also the flexible member for transferring the force around the corner, and the respective corner part itself, are very liable to wear due to the movement of the flexible member to and fro around said corner.

The invention seeks to overcome the above problems in a favourable manner. According to the invention therefore, the second knife and the first knife are each drivingly connected to the hydraulic ram, located near an end portion of each said second and first knife, in which pivotable intermediary means are provided between the hydraulic ram and the respective knives for moving the said first and second knives to and fro in a substantially horizontal direction. By means of such a construction the intermediary means for transmitting the force can be kept short, so that the risk of fracture is reduced considerably. In this construction it is also avoided to transmit any driving force for a second knife through a first knife, so that also the risk of fracture of a knife is reduced.

According to a specific embodiment of the invention, the hydraulic ram for driving a first and a second knife is directed upwardly. In this way, both knives can be driven in a favourable manner and a relatively compact construction is achieved. The area occupied by the drive and the intermediary means in the corner of the horizontal plane of the U-shaped cutter member will be limited to the cross-section of the hydraulic ram, which can be relatively small. Also a suchlike construction is relatively little susceptible to wear. The construction with an upwardly directed ram is, according to the invention, most favourable when it is located substantially in a corner of the U-shaped cutter member.

For a better understanding of the invention and to show how the same may be carried into effect, reference will now be made, by way of example, to the accompanying drawings, in which;
Figure 1 is a perspective view which roughly shows the main part of the implement which are a basis for the embodiments shown in the subsequent drawings;
Figure 2 is a view taken in the direction of the arrow II in Figure 1 of a second embodiment;
Figure 3 is a plan view taken in the direction of the arrow III in Figure 2.

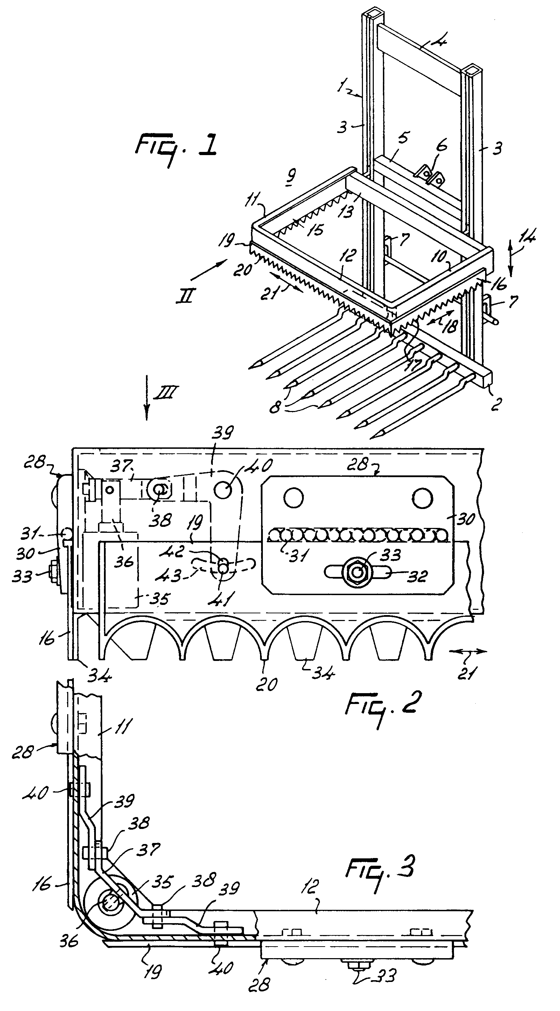

Figure 1 shows the main parts of an implement according to the invention, which form a basis for the embodiment shown in the drawings. The implement shown in Figure 1 comprises a frame 1 which, during operation, is in an approximately vertical position and is in the shape of a rectangular frame work which includes an approximately horizontal lower beam 2, to whose ends approximately vertical pillars 3 are rigidly connected. The upper ends of the pillars 3 are interconnected, likewise rigidly, by an upper beam 4 which is arranged parallel to the lower beam 2. The two pillars 3 are also rigidly interconnected by an intermediate beam 5 in a region located between the beams 2 and 4. Halfway its length, the beam 5 is provided with connection points 6 intended for coupling the implement to the upper lifting arm of a three-point lifting hitch of a tractor carrying and driving the said implement. Two spaced-apart connection points 7 are disposed on the pillars 3 near the lower beam 2; the connection points 7 serve to connect the implement to the lower arms of the afore-mentioned lifting hitch of the tractor.

At the side of the frame 1 facing away from the connection points 6 and 7, a plurality of mutually parallel teeth 8 are provided which are rigidly connected to the lower beam 2. The teeth 8 are all provided at the same distance from a horizontal plane and together constitute a carrier member for a silage block to be cut out. The ends of the teeth 8 facing away from the lower beam 2 are pointed.

The frame 1 furthermore carries a cutter member 9 which also extends parallel to a horizontal plane. The active part of the cutter member 9 comprises two interspaced, mututally parallel side portions 10 and 11, whose relative spacing approximately defined the working width of the cutter member 9. At the sides facing away from the frame 1, the side portions 10 and 11 are interconnected by an intermediate section 12. In a plan view, the side portions 10 and 11 and the intermediate section 12 basically constitute a carrier of the U-shaped cutter member 9. As is shown in Figure 1, the ends of the side portions 10 and 11 facing the frame 1 are interconnected by a connecting section 13, by means of which the cutter member 9 is fitted to the two pillars 3. The connecting section 13, and hence the entire cutter member 9, is drivably movable upwardly and downwardly in height along the two pillars 3 in the direction indicated by the arrows 14 in Figure 1. This drive in the direction of the arrow 14 is not shown in further detail, and is designed such, in a manner known per se, that the cutter member 9 can be moved with great force through the silage in the direction of the teeth 8 and can also be moved upwardly in the direction of the upper beam 4.

The side portions 10 and 11 and the intermediate section 12 comprise a rigid carrier 15 which, in a plan view, is in the shape of a U and is designed as one integral component part. At its side facing the frame 1, the carrier 15 is rigidly connected to the connecting section 13. In a plan view, the carrier 15 is of a width which is as narrow as possible in view of the driving forces required for its downward movement through the silage to be cut out.

At its outer and bottom side, respectively, each side portion 10 and 11 is provided with a plate-shaped steel knife 16 which, in a horizontal view, is of a substantially rectangular shape, whose main dimension extending in the horizontal direction is an order of magnitude greater than the vertical dimension. The horizontal upper edge and the relatively short vertical side edges of each knife 16 are rectilinear. The horizontal lower edge of each knife 16 is provided with downwardly pointing teeth 17. The two knives 16, which form part of the side portions 10 and 11, are drivable such, in a manner still further to be described, that they oscillate in a direction which is approximately parallel to a horizontal plane (arrows 18 in Figure 1).

At its outer side and its bottom side, the intermediate section 12 of the cutter member 9 is also provided with a plate-shaped knife 19, whose shape can be defined in a similar manner as in the foregoing for the knives 16; in general, however, the longitudinal dimension of the knife 19, which is directed parallel to the frame work of the frame 1, will be greater than that of the knives 19. The knife 19 is provided with downwardly directed teeth 20 and, in a manner still further to be described, also performs an ocsillating movement which is approximately parallel to a horizontal plane, in the direction indicated by the arrows 21.

The housing 30 is contiguous to the carrier 15, but in the region of the straight upper boundary of the knives 16 and 19, respectively, encloses a through-shaped concavity in which a row of hardened balls 31 is accommodated. At their upper sides the balls bear against a bearing surface of the housing 30 and at their bottom sides against the straight upper edge of the corresponding knife 16, 19 respectively. Below the row of balls, the housing 30 is provided with a horizontal slotted aperture 32, the length of which is equal to or slightly larger than the stroke of the relevant knife caused by the cylinders 35. In the region of a slotted aperture 32 there is fitted (only) to the knife a pin 33 which projects outwardly through the slotted aperture and outside the housing 30 is provided with a widened portion which bears on the edges of the slotted aperture.

When the knife is moved to and fro, it is bearing-supported by the row of balls 31 in the housing 30 and hence on the carrier 15, so that the force to be produced by the cylinder 35 can be reduced considerably, whilst the pin 33 prevents the possibility of the knife moving away from the carrier 15. Preferably, each one of the knives 16 and the knife 19 is provided with two or more ball-bearings 28.

As is apparent from Figure 2, the carrier 15 is extended downwardly by means of a counter-knife 34 provided with teeth having e.g. the same pitch as the teeth 17 and 20, respectively. During operation, the counter-knife is stationary relative to the carrier 15.

Figures 2 and 3 showing the ball-bearing 28, show an embodiment with vertically arranged hydraulic cylinders 35 which are disposed at the inner side of the carrier 15 in the two corners of the cutter member. The cylinders themselves are rigidly connected there to the carrier 15.

The upwardly extending piston rod 36 of each hydraulic cylinder 35 carries at its upper end a horizontally directed cross beam 37 which is arranged obliquely in the relevant corner and is located symmetrically relative to the centre line of the piston rod. At its both ends, the cross beam 37 is provided with pins 38 which effect a pivotal connection to the ends of levers 39 which are pivotally bearing-supported about horizontal pins 40 at the carrier 15. In the mid-way position of the piston of the cylinder 35, a connecting line between the centre line of each pin 38 and the centre line of the associated pin 40 is approximately in a horizontal position, in which position the other leg of the lever 39 points straightly downwards. This other leg is provided at its end with a horizontal pin 41. The ends of the cross beam 37 are bent such that the two levers 39, which are arranged symmetrically relative to the piston rod 36, are located parallel to the adjacent portions of the carrier 15 and the pins 38, 40 and 41 are directed perpendicularly to said carrier portion.

However, the afore-mentioned pin 41 is provided capable of movement in a short slotted aperture 42 which points towards the pin 40 and is provided in the downwardly extending leg of the lever 39. The pin 41 itself is rigidly connected to the nearby knives 16 and 19, respectively. To that end, the nearby portion of the carrier 15 is provided with a slotted aperture 43 which is in the shape of an arc of a circle and is folded about the centre line of the pin 40.

The two hydraulic cylinders 35 are so loaded and controlled by means of a control valve that, when the piston 36 of one of the cylinders moves outwardly, the piston rod of the other cylinder moves inwardly. This movement is coupled such that these oppositely performed movements are of the same magnitude.

When the piston rod 36 of the cylinder 35 shown in Figure 2 moves outwardly in upward direction, the cross beam 37 also moves upwardly and the downwardly pointing leg of the lever 39 (Figure 2) moves towards the corner of the cutter member. This also holds for the lever 39 located at the other side of this same corner. This implies that the lever 39 takes along the pin 41 connected to the knife and hence the knife itself, so that the two knives 16 and 19, respectively, move towards the corner of the cutter member. The length of the knives is chosen such that their extreme ends just do not touch each other.

It should be noted that the slotted aperture 42 provided in the lever cannot cause metal portions to rattle during the drive of the knives. The direction in which the pin 41 is located by the edge of the slotted aperture 42 is perpendicular to the longitudinal direction of the slotted aperture, so that, if the pin is provided with a tight fit therein, no jerky movements will be produced. The same holds for a slotted aperture provided near the pin 38 in the cross beam 37 and extending horizontally (Figure 2).

The drive mechanism associated with the hydraulic cylinder arranged in the other corner of the cutter member is identical to that illustrated in Figures 2 and 3. The two cylinders 35 are so driven with the aid of a control valve that, when the piston rod of one of the cylinders moves outwardly, the piston rod of the other cylinder moves inwardly into the cylinder.

Also in this embodiment, the drive mechanism of the oscillating knives is of such a construction that the drive forces intended for driving a certain knife are not transferred via another knife; in this case the drive forces are transferred directly by the knife.

The forces to be exerted by the two cylinders are relatively slight as compared with corresponding cylinders used in the prior art embodiment, since each cylinder need only drive half of the entire knife-length; consequently, the diameter of the cylinders may be comparatively small, so that an arrangement in a corner of a cutter member, seen in plan view, does not inhibit or hardly inhibits the silage moving inside the U-shaped cutter member upon downward movement of said cutter member along the frame. The diameter of the cylinders 35 can be reduced further by using a comparatively high pressure for the hydraulic fluid.

## Claims

1. An implement for cutting fodder, such as silage, comprising an upwardly directed frame (1), along which an at least predominantly horizontally extending U-shaped cutter member (9) is movable in upward and downward direction, the cutter member (9) including a carrier (10, 11, 12) supporting at least one first knife (16) extending rearwardly at an angle of about 90° to the plane defined by the upwardly directed frame (1) and a second knife (19) located near the rear end of the first knife (16) relative to the frame and extending parallel to the said frame (1) within a horizontal plane, which first and second knives (16, 19) by means of a hydraulic ram (35) connected rigidly to the carrier (10, 11, 12) near an end portion of a respective knife (16, 19), are movable in their longitudinal direction relative to said carrier (10, 11, 12), characterized in that the second knife and the first knife are each drivingly connected to the hydraulic ram (35), located near an end portion of each said second and first knife, in which pivotally intermediary means (37 to 40) are provided between the hydraulic ram (35) and the respective knives (16, 19) for moving the said first and second knives (16, 19) to and fro in a substantially horizontal direction.

2. An implement for cutting fodder, as claimed in claim 1, characterized in that the hydraulic ram (35) is upwardly directed and mounted substantially in a corner of the U-shaped cutter member (9), as seen in plan view.

3. An implement for cutting fodder, as claimed in claim 1 or 2, characterized in that the intermediary means (37 to 40) comprise levers (39) provided on different sides of the hydraulic ram (35), each lever (39) being movable within a plane parallel to a plane defined by the blade of a knife (16, 19).

4. An implement for cutting fodder, as claimed in any one of the preceding claims, characterized in that the cutter member (9) includes at least one knife (16, 19) which is bearingly supported by means of one or more balls (31).

## Patentansprüche

1. Gerät zum Schneiden von Futter, wie z. B. Silage, mit einem aufwärts gerichteten Rahmen (1), an dem entlang eine mindestens überwiegend horizontal ausgerichtete, U-förmige Schneidvorrichtung (9) aufwärts und abwärts bewegbar ist, die einen Träger (10, 11, 12) aufweist, der mindestens ein erstes Messer (16) trägt, das in einem Winkel von etwa 90° zu der von dem aufwärts gerichteten Rahmen (1) definierten Ebene nach hinten gerichtet ist, sowie ein zweites Messer (19), das in bezug auf den Rahmen nahe dem hinteren Ende des ersten Messers (16) angeordnet ist und sich in einer horizontalen Ebene parallel zu dem Rahmen (1) erstreckt, wobei das erste und das zweite Messer (16, 19) mittels eines hydraulischen Arbeitszylinders (35), der nahe einem Endteil eines zugehörigen Messers (16, 19) mit dem Träger (10, 11, 12) starr verbunden ist, relativ zu dem Träger (10, 11, 12) in ihrer Längsrichtung bewegbar sind,
dadurch gekennzeichnet, daß das zweite Messer und das erste Messer jeweils mit dem hydraulischen Arbeitszylinder (35) antriebsverbunden sind, der nahe einem Endteil des zweiten und des ersten Messers angeordnet ist, und daß zwischen dem hydraulischen Arbeitszylinder (35) und den jeweiligen Messern (16, 19) schwenkbare Zwischenglieder (37 bis 40) angeordnet sind, um das erste und das zweite Messer (16, 19) in im wesentlichen horizontaler Richtung alternierend zu bewegen.

2. Gerät zum Schneiden von Futter nach Anspruch 1,
dadurch gekennzeichnet, daß der hydraulische Arbeitszylinder (35) aufwärts gerichtet und in Draufsicht im wesentlichen in einer Ecke der U-förmigen Schneidvorrichtung (9) angeordnet ist.

3. Gerät zum Schneiden von Futter nach Anspruch 1 oder 2,
dadurch gekennzeichnet, daß die Zwischenglieder (37 bis 40) beiderseits des hydraulischen Arbeitszylinders (35) angeordnete Hebel (39) aufweisen, wobei jeder Hebel (39) in einer Ebene bewegbar ist, die parallel zu einer von der Klinge eines Messers (16, 19) definierten Ebene verläuft.

4. Gerät zum Schneiden von Futter nach einem der vorhergehenden Ansprüche,
dadurch gekennzeichnet, daß die Schneidvorrichtung (9) mindestens ein Messer (16, 19) aufweist, das mittels einer oder mehrerer Kugeln (31) gelagert und abgestützt ist.

## Revendications

1. Appareil pour couper du fourrage, tel que de l'ensilage, comprenant un châssis (1) dirigé vers le haut, le long duquel un organe de coupe (9) en forme de U s'étendant au moins principalement horizontalement est mobile en direction vers le haut et vers le bas, l'organe de coupe (9) comportant un élément porteur (10, 11, 12) supportant au moins un premier couteau (16) s'étendant vers l'arrière sous un angle d'environ 90° par rapport au plan défini par les châssis (1), s'étendant vers le haut, et un deuxième couteau (19) situé près de l'extrémité postérieure du premier couteau (16) par rapport au châssis et s'étendant parallèlement audit châssis (1) dans un plan horizontal, lesquels premier et deuxième couteaux (16, 19), sont, au moyen d'un vérin hydraulique (35) relié rigidement à l'élément porteur (10, 11, 12) près d'une partie terminale d'un couteau respectif (16, 19), mobiles dans leur sens longitudinal par rapport audit élément porteur (10, 11, 12),
**caractérisé** en ce que le deuxième couteau et le premier couteau sont chacun en liaison d'entraînement avec le vérin hydraulique (35) situé près d'une partie terminale de chacun desdits deuxième et premier couteaux, dans lequel des moyens intermédiaires pivotants (37 à 40) sont prévus entre le vérin hydraulique (35) et les couteaux (16, 19) respectifs (16, 19) pour entraîner ledits premier et deuxième couteaux (16, 19) en un mouvement alternatif dans une direction pratiquement horizontale.

2. Appareil pour couper du fourrage selon la revendication 1, caractérisé en ce que le vérin hydraulique (35) est dirigé vers le haut et monté sensiblement dans un coin de l'organe de coupe (9) en forme de U, en étant vu en plan.

3. Appareil pour couper du fourrage selon la revendication 1 ou 2, caractérisé en ce que les moyens intermédiaires (37 à 40) comprennent des leviers (39) prévus sur des côtés différents du vérin hydraulique (35), chaque levier (39) étant mobile dans un plan parallèle à un plan défini par la lame d'un couteau (16, 19).

4. Appareil pour couper du fourrage selon l'une quelconque des revendications précédentes, caractérisé en ce que l'organe de coupe (9) comporte au moins un couteau (16, 19) qui est supporté au moyen d'une ou plusieurs billes (31) formant un palier à billes.
